# EUROPEAN PATENT APPLICATION

(11) **EP 4 124 989 A1**
(43) Date of publication of application: **01.02.2023**
(21) Application number: 21188769.0
(22) Date of filing: 30.07.2021
(51) Int. Cl.: G06F 40/30, G06N 5/02

(54) **AUTOMATION RULES DEFINITION AND AUDIT USING NATURAL LANGUAGE PROCESSING**

(71) Applicant: Waylay NV, 9000 Ghent (BE)
(72) Inventor: Pizurica, Veselin, Ghent (BE); Fagadar, Mihai, Ghent (BE)
(74) Representative: Purdylucey Intellectual Property

(57) **Abstract**

A method for defining and auditing rules in a knowledge-based automation system (AS), includes generating a semantic representation (SR) of a textual NL representation of a user command, creating a new rule template for the AS based on SR of the user command when the user command includes a new rule definition request, storing new rule template in a rule database of the AS in an inactive state, comparing an SR of new rule template with an SR of the user command to determine a deviation of the new rule template from the user command, generating a textual NL representation of a new rule report for the user, the new rule report including the new rule template, and the determined deviation, receiving a user response to the new rule report, and updating a state of the new rule template in the rule database based on SR of the user response.

## Description

### Field

The present disclosure relates to natural language processing, and more specifically to defining and auditing rules in a knowledge-based automation system (AS) using semantic representation of natural language.

### Background

Automation rules are essential in industry scenarios, where they are employed to generate an automated response to data collected from a controlled environment, in order to solicit an automated response that acts upon said environment.

There exists several methods for defining automation rules, the majority being based on computer programming or low-code/no code approaches that require a human operator to interact with the automation system (AS) via a user interface. This requires the operator to possess certain computer operation skills that go beyond domain-specific knowledge, which can act as a deterrent in the adoption of large-scale automation. For example, a healthcare professional can have a strong grasp of the domain and the way decisions need to be taken in this field, but lack the skills to translate them into automation rules executable by the AS.

Over the past decade, Natural Language (NL) interaction has been predominantly introduced in home automation and consumer-oriented scenarios in the form of personal digital assistants. An example of such personal digital assistant is Amazon Alexa' which implements a NL questions and answers (Q&A) system in which user is presented with choice over domains and intents, but not the option to create the intents. Another example of personal digital assistant is 'Siri' which is a multimodal application available on Apple iOS and OS X devices. In a fashion similar to Amazon Alexa, it focuses on offering Q&A capabilities on the mentioned electronic devices, based on three possible outputs selected using NL, taking into account geolocation, motion sensor information, touch screen operation, application context etc. However, Apple's Siri uses a generic approach to identify rule elements and define the rule structure based on the AS capabilities. Also, the user feedback refers to presenting the operator with alternatives to choose, rather than confirming that the semantic of the dynamically generated rule is correct.

Beyond home automation or consumer-specific scenarios, the state of the art also describes business or academia-focused NL-based query capabilities. For example, there exists a voice-driven object retrieval mechanism which focuses on mapping NL onto a metadata database containing cases, models and keywords for the purpose of returning a plurality of matches and possible permutations in a finite set of objects back to the user. The user feedback can be incorporated as a learning mechanism which extends the metadata database with new cases and keywords. There exists some technologies that aim to bridge the gap between domain experts and developers in respect to translating domain knowledge into business rules. However, such technologies require the prior definition of natural language templates in order to function. Thus, all the known technologies focus on using NL to immediately perform actions based on spoken user commands, optionally by employing a Q&A system as an intermediate step to solve ambiguities. However, they do not cover the audit aspect that enables the human operator to subsequently follow-up on the action executions.

Also, Industry 4.0 use cases demand the flexibility of allowing the users to define rules dynamically based on the advertised AS capabilities, as well as the presence of logging and auditing features. While covered by traditional man-machine interfaces like graphical user interfaces, these desiderates are not yet fulfilled by current NL-based user to AS interfaces.

Hence, in view of the above, there is a need for a system and method that enables a user to define and audit rules in a knowledge-based automation system (AS) using semantic representation of natural language processing without requiring any technical computer coding skills.

### Summary of the Invention

According to the invention there is provided, as set out in the appended claims, a method for defining and auditing rules in a knowledge-based automation system (AS). The method includes generating a semantic representation (SR) of a textual NL representation of a user command, creating a new rule template for the AS based on the SR of the user command when the user command includes a new rule definition request, storing the new rule template in a rule database of the AS in an inactive state, comparing an SR of the new rule template with an SR of the user command to determine a deviation of the new rule template from the user command, generating a textual NL representation of a new rule report for the user, the new rule report including the new rule template, and the determined deviation, receiving a user response to the new rule report, and updating a state of the new rule template in the rule database based on SR of the user response.

In an embodiment of the present invention, the method further includes mapping the SR of the user command with a graph-based rule model of the AS to create the new rule template.

In an embodiment of the present invention, the method further includes generating the SR of the new rule template based on the graph-based rule model of the AS.

In an embodiment of the present invention, the method further includes generating an SR of the user response to the NL representation of the new rule template and the deviation, and updating the inactive state of the new rule template in the rule database to an active state, when the user approves the new rule template, wherein in the active state, the new rule template is executable to perform an automated action in an environment controlled by the AS.

In an embodiment of the present invention, the method further includes performing one of: deleting the new rule template from the rule database and marking the new rule template as rejected, when the user rejects the new rule template.

In an embodiment of the present invention, the method further includes digitally signing the new rule template with a unique identifier of the user and associate the user details with the SR of the new rule template, when the user approves the new rule template.

In an embodiment of the present invention, the method further includes mapping an SR of the user command with one or more rule executions stored in a rule execution database of the AS when the user command includes an audit query for the AS in response to an observed characteristic of the environment, wherein recorded execution outcome of each rule matches the observed characteristic, retrieving one or more rule templates corresponding to the one or more rule executions from the rule database, and retrieving one or more users associated with each retrieved rule template, and an execution history of each rule template from the rule execution database.

In an embodiment of the present invention, the method further includes generating an SR of each retrieved rule template, user information and an execution history of each retrieved rule template, and generating an NL based audit report to the user based on the generated SR.

There is further provided a system for defining and auditing rules in a knowledge-based automation system (AS). The system includes a natural language (NL) interface that includes an NL processor for generating a semantic representation (SR) of a textual NL representation of a user command, a sematic data mapper for creating a new rule template for the AS based on the SR of the user command when the user command includes a new rule definition request, and storing the new rule template in a rule database of the AS in an inactive state, a semantic data comparator for comparing an SR of the new rule template with an SR of the user command to determine a deviation of the new rule template from the user command, and an NL generator for generating a textual NL representation of a new rule report for the user, the new rule report including the new rule template, and the determined deviation. The NL processor receives user response to the new rule report, and the semantic data mapper updates a state of the new rule template in the rule database based on the SR of the user response.

In an embodiment of the present invention, the system further includes the semantic data mapper that is configured to map the SR of the user command with a graph-based rule model of the AS to create the new rule template.

In an embodiment of the present invention, the system further includes a semantic data extractor for generating the SR of the new rule template based on the graph-based rule model of the AS.

In an embodiment of the present invention, the semantic data mapper is further configured to:
generate an SR of the user response to the NL representation of the new rule template and the deviation, and update the inactive state of the new rule template in the rule database to an active state, when the user approves the new rule template, wherein in the active state, the new rule template is executable to perform an automated action in an environment controlled by the AS.

In an embodiment of the present invention, the semantic data mapper is configured to perform one of: deleting the new rule template from the rule database and marking the new rule template as rejected, when the user rejects the new rule template.

In an embodiment of the present invention, the semantic data mapper is further configured to digitally sign the new rule template with a unique identifier of the user and associate the user details with the SR of the new rule template, when the user approves the new rule template.

In an embodiment of the present invention, the semantic data mapper is configured to map an SR of the user command with one or more rule executions stored in a rule execution database of the AS when the user command includes an audit query for the AS in response to an observed characteristic of the environment, wherein recorded execution outcome of each rule matches the observed characteristic, retrieve one or more rule templates corresponding to the one or more rule executions from the rule database, and retrieve one or more users associated with each retrieved rule template, and an execution history of each rule template from the rule execution database.

In an embodiment of the present invention, the semantic data extractor is configured to generate an SR of each retrieved rule template, user information and an execution history of each retrieved rule template, and wherein the NL generator is configured to generate and communicate an NL based audit report to the user based on the generated SR.

In an embodiment of the present invention, the system further includes the AS that includes an API communicatively coupled to the NLI, a sensor and actuator catalog configured to store metadata information about one or more sensors and actuators, wherein the one or more sensors and actuators represent one or more abstractions in the rule model of the AS, a rule database configured to store one or more rule templates registered with the AS, a resource definition database configured to store one or more definitions of one or more resources associated with the environment, a rule engine configured to create one or more rule instances from the one or more rule templates and execute the one or more rule instances in relation to a set of defined resources and a rule execution database configured to store historical data pertaining to the one or more rule instance executions.

According to the invention there is further provided, as set out in the appended claims, a non-transitory computer readable medium configured to store a program causing a processor of a computer to define and audit rules in a knowledge-based automation system (AS). The program is configured to generate a semantic representation (SR) of a textual NL representation of a user command, create a new rule template for the AS based on the SR of the user command when the user command includes a new rule definition request, store the new rule template in a rule database of the AS in an inactive state, compare an SR of the new rule template with an SR of the user command to determine a deviation of the new rule template from the user command, generate a textual NL representation of a new rule report for the user, the new rule report including the new rule template, and the determined deviation, receive a user response to the new rule report, and update a state of the new rule template in the rule database based on SR of the user response.

There is also provided a computer program comprising program instructions for causing a computer program to carry out the above method which may be embodied on a record medium, carrier signal or read-only memory.

Various embodiments of the present invention employ a semantic NL representation for the purpose of creating and auditing rules in the automation system (AS), which covers a complete lifecycle as opposed to just a retrieval mechanism. The proposed system and method enable a user to focus on domain knowledge and use it in a natural way to create, audit and manage the rules on an automation platform for a complete NL-based interaction with the environment controlled by the AS. In particular, the audit capability plays an essential role in root cause analysis due to its capability of explaining in a human understandable way why a particular outcome has occurred in the controlled environment. The audit sequence described in the present invention is acting upon the rules themselves and their executions and not on the user selection of intent.

Further, there is no reliance on predefined ontologies, as the semantic data mapper relies on the capabilities of the AS, as exposed by its API, to respond to the NL commands issues by the subject-matter expert (SME) based on their semantic representation. By introducing the semantic data comparator and the use of the SR model as internal NL representation for all NLI processes, the system is capable of automatically identifying the differences between the received NL commands and its own interpretation of the rule, thereby making it possible to provide accurate feedback to the SME and remove the need for Q&A interaction. The NL-based root cause analysis and system explanation are enabled by the rule audit sequence, which relies on the rule metadata recorded during the rule definition and acknowledgement stages to provide a clear explanation of why a particular result has occurred in a controlled environment.

### Brief Description of the Drawings

The invention will be more clearly understood from the following description of an embodiment thereof, given by way of example only, with reference to the accompanying drawings, in which:-
FIG.1 illustrates a system for defining and auditing rules in a knowledge-based automation system (AS), in accordance with an embodiment of the present invention;
FIG's. 2A, 2B and 2C provide an end-to-end example of the three interaction sequences in action, covering the use case of an Industry 4.0 factory floor supervisor in accordance with an embodiment of the present invention; and
FIG.3 illustrates a method for defining and auditing rules in a knowledge-based automation system (AS), in accordance with an embodiment of the present invention.

### Detailed Description of the Drawings

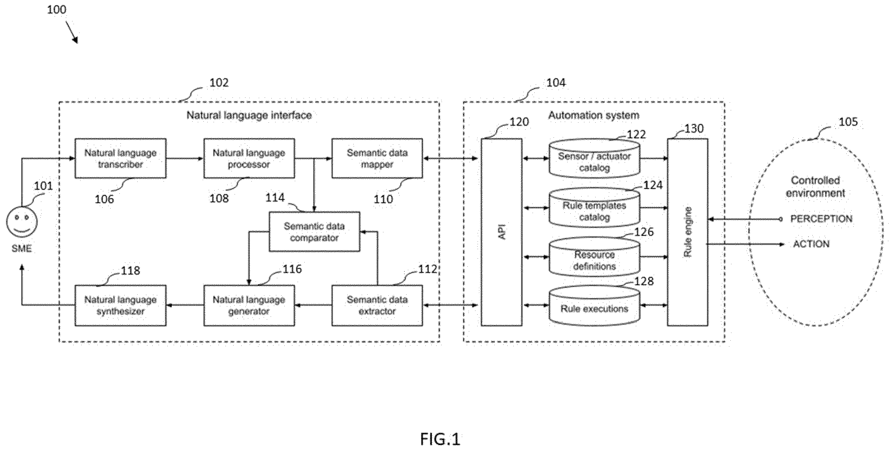

FIG.1 illustrates a system 100 for defining and auditing rules in a knowledge-based automation system (AS), in accordance with an embodiment of the present invention. The system 100 is an autonomous computer system that includes two components, i.e. a natural language interface (NLI) 102 and an automation system (AS) 104. The AS 104 is a data orchestration system capable of interfacing with an environment 105 for the purpose of controlling it based on user-defined automation rules. Another capability of the AS 104 is to expose an abstracted rule model towards other computer systems via its API, allowing said systems to interface with the AS 102 and manipulate its data in a controlled manner. In the preferred embodiment, the environment 105 pertains to an industrial environment, such as Industry 4.0 domain. The term Industry 4.0 domain encompasses a promise of a new industrial revolution in which advanced manufacturing techniques are used with the Internet of Things (loT) to create manufacturing systems that are not only interconnected, but communicate, analyse, and use information to drive further intelligent action back in the physical world.

The NLI 102 translates the NL instructions received from a user or subject-matter expert (SME) 101 into application programming interface (API) requests towards the AS 104 and closes the loop by converting AS responses into NL that is transmitted back to the SME 101. The NLI 102 includes the necessary logic to manage the rule definition, acknowledgement and audit sequences, which are coupled to the semantic representation (SR) of the received NL commands.

The NLI 102 includes a natural language (NL) transcriber 106, an NL processor 108, a semantic data mapper 110, a semantic data extractor 112, a semantic data comparator 114, an NL generator 116, and an NL synthesizer 118. The AS 104 includes an Application Programming Interface (API) 120, a sensor/actuator catalog 122, a rule template catalog 124, a resource definition database 126, a rule execution database 128, and a rule engine 130.

The API 120 supports interactions with other computer systems, for example the NLI 102 in the context of the present invention. The sensor and actuator catalog 122 is a database containing metadata information about all sensors and actuators that are supported by the AS 104. Both sensors and actuators represent abstractions in the rule model employed by the AS 104. The sensors allow the AS 104 to collect data about the environment 105 in order to identify some of its properties. The actuators allow the AS 104 to act upon the environment 105 in order to transform some of its properties.

The rule templates catalog 124 (may be hereinafter also referred to as a rule database 124) is a database containing all automation rule templates currently registered with the AS 104. The templates are used to instantiate and execute a particular rule against a selected set of resources defined in relation to elements present in the controlled environment 105. The resource definitions database 126 contains the definitions for a set of resources associated with the environment, like for example a power cabinet, an HVAC system or an automated door. The resources can be monitored and controlled via automation rules that are instantiated based on the templates found in the rule templates catalog 124. The rule executions database 128 contains a history of all rule instance executions and their runtime data. Every time a rule instance is executed, the rule engine 130 of the AS 104 creates a corresponding entry in the rule executions database 128, comprising runtime data including but not limited to trigger conditions, sensor and actuator properties and states, impacted resources, log messages etc.

The NL transcriber 106 generates a textual NL representation of each received command/request from the user 101. In the context of the present disclosure, the user 101 is a subject matter expert (SME) of the environment 105, and may be hereinafter also referred to as SME 101. Further, the user command/request may include one of: a new rule definition request, an acknowledgement to a new rule template, and an audit query. The user commands may be captured in any form e.g., orally via a microphone, textually via a console prompt/email/SMS, or by handwriting using a stylus and a tablet. It would be apparent to one of ordinary skill in the art, that the present invention is agnostic to the embodiment of the NL transcriber 106 which can be, for example in case of spoken commands, a dedicated computer program or a cloud service like AWS Amazon Transcribe or the Azure Cognitive Speech service.

The NL processor 108 receives the textual NL representation of the user command from the NL transcriber 106, and extracts the semantic representation (SR) of the user command therefrom. The SR can be modelled in any of known machine-readable forms described in the literature, like for example the abstract meaning representation (AMR). Besides being machine-readable, it has the added benefit of reconciling the differences between NL commands with different textual representations but with the same meaning.

The semantic data mapper 110 runs the algorithms responsible for implementing the rule definition, acknowledgment and audit requests. These algorithms match the SR of the user command with the rule model exposed by the AS 104 via its API 120, like sensors and actuators metadata, logical gates, resource definitions, rule templates and executions etc.

The semantic data extractor 112 translates the rule abstractions and metadata exposed by the AS 104 via its API 120 back into an SR model. The semantic data comparator 114 implements a SR comparison method for the purpose of detecting the differences between two or more SR models. The NL generator 116 converts an SR model into a NL string. The NL synthesizer 118 converts a textual NL representation into a form that can be directly communicated to the SME 101. As for the NL synthesizer 106, the present invention is agnostic to the embodiment of this function. For example, the NL can simply output the result to a console, insert it into the body of an email and/or use text-to-speech techniques to read it to the SME 101.

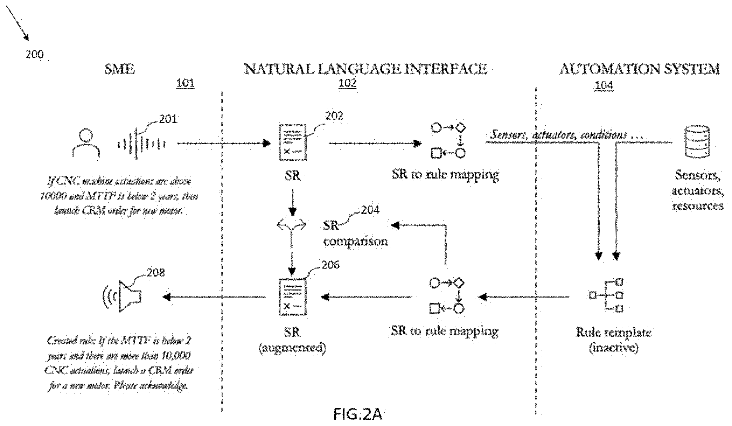

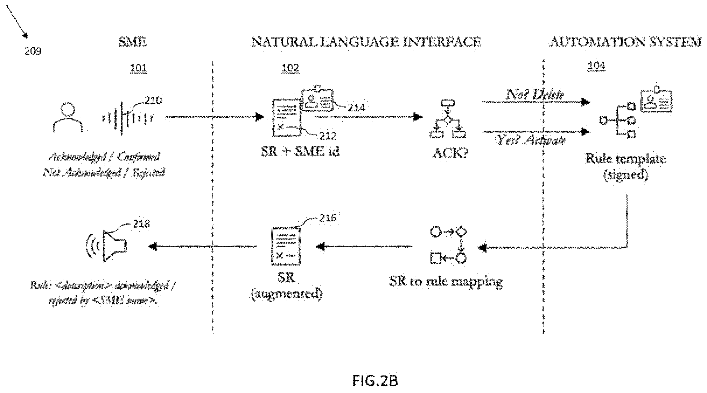

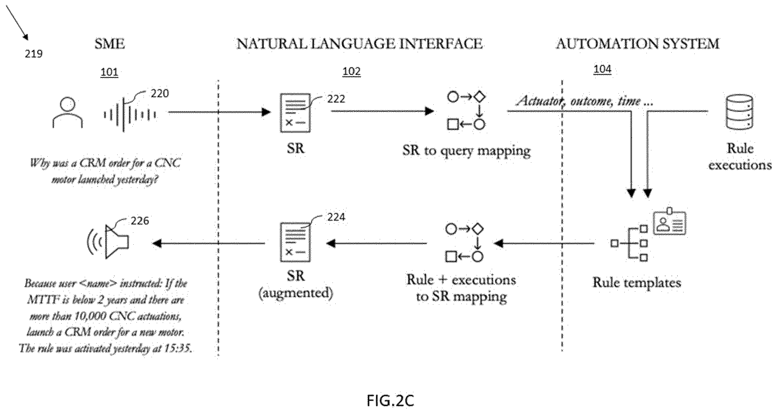

FIGs. 2A, 2B and 2C provide an end-to-end example of the three interaction sequences in action, covering the use case of an Industry 4.0 factory floor supervisor who wants to ensure that there is always a spare motor in stock for a CNC machine and that a new CRM case is opened for its acquisition when the machine activity exceeds a certain limit.

The first interaction sequence 200 between the SME 101, the NLI 102 and the AS 104 enables the SME 101 to define a new automation rule on the AS 104 through the NLI 102. Now referring to both FIGs. 1 and 2A together, the NLI 102 receives an NL command 201 from the SME 101, where the command 201 includes a new rule definition request. In an example, the NL command 201 of the SME 101 is *'If CNC machine actuations are above 10000 and MTTF is below* 2 *years, then launch CRM order for new motor'.*

In the NLI interface 102, the NL transcriber 106 converts the user command 201 into its textual NL representation, the NL processor 108 generates a semantic representation (SR) 202 of the textual NL representation of the user command 201, and the semantic data mapper 110 creates a new rule template based on the SR 202 when the user command includes a new rule definition request. More specifically, the semantic data mapper 110 runs a new rule creation algorithm to perform 'SR to rule mapping' which includes mapping the SR 202 with a graph-based rule model supported by the AS 104. The semantic data mapper 110 identifies the elements belonging to the new rule request and composes the new rule template. The semantic data mapper 110 uses the extracted SR 202 to identify a supported subset of AS capabilities represented by sensors and actuators, their metadata and/or their digital twin representation. The semantic data mapper 110 uses the extracted SR 202 to infer the properties of the sensors and actuators identified in the previous step and the relations between them, including but not limited to activation conditions, order of invocation, data dependencies or other system-specific constraints, and uses the identified set of sensors, actuators, their respective properties and relations to define the new rule template.

The semantic data mapper 110 further stores and saves the new rule template in the rule template catalog 124. The new rule template is saved in an inactive state in the rule template catalog 124 till an acknowledgement is received from the SME 101. Additionally or optionally, the semantic data mapper 110 may perform checks to ensure that a rule template identical to the new rule template does not exist.

Further, in the NLI 102, the semantic data extractor 112 retrieves the metadata of the new rule template using the API 120 and generates an SR 204 of the new rule template based on the graph-based rule model of the AS 104. The semantic data extractor 112 uses a reverse method of the one employed to generate the new rule template to generate the SR 204.

The semantic data comparator 114 compares the SR 204 of the new rule template with the SR 202 of the user command 201 to determine a deviation of the new rule template from the user command 201, and generates an augmented SR 206. The augmented SR 206 includes an SR 204 of the new rule template and the deviation. Thus, the semantic data comparator 114 performs automated validation of the new rule template, by comparing the differences between the SR 202 used to create it, and the SR 204 extracted from the metadata after creation.

Further, in the NLI 102, the NL generator 116 generates a textual NL representation of a new rule report based on the augmented SR 206. The new rule report includes the new rule template accompanied by a summary of detected ambiguities and misalignments. The NL synthesizer 118 converts the new rule report in an NL representation 208 that is directly communicated to the SME 101 for the purpose of validation by the SME 101. An exemplary NL representation 208 of the new rule report is *"Created rule: If the MTTF is below* 2 *years, and there are more than 10,000 CNC actuations, launch a CRM order for* a *new motor. Please acknowledge."*

The first interaction sequence 200 may be also referred to as a rule definition sequence as it enables the SME 101 to create a new automation rule on the AS 104 using the NLI 102, and receives back the AS interpretation of the rule for validation and acknowledgement. In another example, the user command *"Turn on the air conditioning in meeting room A if the outside temperature is above 25 degrees"* may cause the system 100 to respond with *"Created rule: If outside temperature is above 25 degrees then turn on the AC in meeting room A. Please acknowledge".*

The second interaction sequence 209 between the SME 101, the NLI 102 and the AS 104 enables the SME 101 to acknowledge the new rule template through the NLI 102. The NLI 102 receives user response 210 to the new rule report. An exemplary user response 210 may be a voice response indicating but not limited to one of *Acknowledged, Confirmed, Not acknowledged* or *Not confirmed.*

In the NLI interface 102, the NL transcriber 106 converts the user response 210 into its textual NL representation and identifies user details 214. As an aspect of the present invention, the NL transcriber 106 may identify the SME 101 as an AS platform user based on data inferred from the user response 210, like for example based on voice signature or face recognition in case of video-based communication. The NL transcriber 106 may use biometrical data to identify the SME 101 for the purpose of signing the rule, including, but not limited to voice or face recognition.

The NL processor 108 generates a semantic representation (SR) 212 of the textual NL representation of the user response 210. Further, the semantic data mapper 110 determines if the user response qualifies as an acknowledgment or as a rejection of the new rule template based on the SR 212. The semantic data mapper 110 then updates a state of the new rule template in the rule database 124 based on the SR 212.

In an embodiment of the present invention, the semantic data mapper 110 updates the inactive state of the new rule template in the rule database 124 to an active state, when the user 101 approves the new rule template, wherein in the active state, the new rule template is executable to perform an automated action in the environment 105. In case of acknowledgement, the rule database 124 is updated to include the SME details as passed on by the NLI 102 and the state of the new rule template state is set to active, marking it as executable by the rule engine 130. Also, the semantic data mapper 110 digitally signs the new rule template with a unique identifier of the user and associate the user details with the SR of the new rule template, when the user approves the new rule template. In another embodiment of the present invention, the semantic data mapper 110 performs one of: deleting the new rule template from the rule database 124 or marking the new rule template as rejected, when the user rejects the new rule template. This causes the rule engine 130 to exclude the new rule template from any further execution.

More particularly, the semantic data mapper 110 resets its internal acknowledgement waiting state and uses the API 120 to activate and digitally sign the new rule template with the extracted user details, such as a unique identifier of the user, in case of an acknowledgment, and delete in case of a rejection. Based on the request received from the NLI 101, an API controller of the AS 104 updates the rule template database 124. Further, the semantic data extractor 112 generates an augmented SR 216 including the SR of the new rule template with additional data containing information about rule acknowledgment or rejection. The NL generator 116 generates a textual NL representation of the augmented SR 216, and the NL synthesizer 118 converts the textual NL representation of the augmented SR 216 in an output form 218 that can be directly communicated to the SME 101. In an example, NL synthesizer 118 generates the output 218 of format *"Rule: <description> acknow*/*edged*/*rejected by <SME name>".*

The second interaction sequence 209 may be hereinafter referred to as a rule acknowledgement sequence as it enables the SME 101 to use NL to confirm or reject the AS interpretation of the rule definition. In case of acknowledgement, the NLI 102 digitally signs the rule with the SME's unique identifier for the purpose of enabling the auditing of subsequent rule executions. In another example, the user command *"Acknowledged"* issued after the creation of the new rule template, causes the system 100 to sign the rule using the SME's account, activate it and respond with '*Rule: If outside temperature is above 25 degrees then turn on the AC in meeting room A' has been acknowledged by Sam'.*

The third interaction sequence 219 between the SME 101, the NLI 102 and the AS 104 enables the SME 101 to audit the AS 104 through the NLI 102. The NLI 102 receives and processes an NL query 220 from the SME 101. The NL query 220 is an audit query for the AS 104 in response to an observed characteristic of the environment 105. An exemplary NL query 220 is *"Why* was a *CRM order for a CNC motor launched yesterday?".*

In the NLI interface 102, the NL transcriber 106 receives the audit query 220 in form of a typical user command, and converts the audit query 220 into its textual NL representation. The NL processor 108 generates a semantic representation (SR) 222 of the audit query 220. The semantic data mapper 110 determines that the intent expressed by the SR 222 is an audit command and runs an audit algorithm responsible for interpreting it and retrieving relevant data from the AS 104.

The audit algorithm uses the APIs of the AS 104 to identify the actuators associated with the observed environment characteristics mentioned in the audit query. Further, the audit algorithm uses the APIs of the AS 104 to identify the resources referred to by the audit query 220. Based on the identified actuators and resources, the audit algorithm uses the API of the AS 104 to identify the rule execution(s) that have caused the observed environment characteristics. In other words, the semantic data mapper 110 maps the SR 222 with one or more rule executions stored in the rule execution database 128, wherein recorded execution outcome of each rule matches the observed characteristic. From the identified rule executions, the semantic data mapper 110 uses the API of the AS 104 to retrieve their associated rule templates from the rule template catalog 124. The semantic data mapper 110 further retrieves one or more users associated with each retrieved rule template, and an execution history of each rule template from the rule execution database.

The semantic data extractor 110 further generates an SR 224 of each retrieved rule template, and user(s) and execution history associated with each retrieved rule template. In other words, the semantic data extractor 110 augments an SR of each retrieved rule template with additional information about the rule signature and associated rule executions. The NL generator 116 generates an NL based audit report based on the SR 224, and the NL synthesizer 118 communicates the NL based audit report in an output 226 suitable to the user 101. In an example, the output 226 is a voice response *"Because user <name> instructed: If the MTTF is below* 2 *years, and there are more than 10,000 CNC actuations, launch a CRM order for a new motor. The rule* was *activated yesterday at 15:35."*

The third interaction sequence 219 is also referred to as a rule audit sequence, as it allows the SME 101 to query the AS 104 in respect to a particular outcome observed in its controlled environment, using NL. The NLI 102 matches the query's semantic representation to the AS 104 data store of rule executions and uses the signature of the matched rules to provide the SME 101 with an NL audit report containing the reasons the said outcome has been observed. In an example, the SME's query *Why is the AC on in meeting room A?* may cause the system 100 to respond with *"According to* Sam's *request, if outside temperature is above 25 degrees then turn on the AC in meeting room A rule* was *executed today at 10:30."*

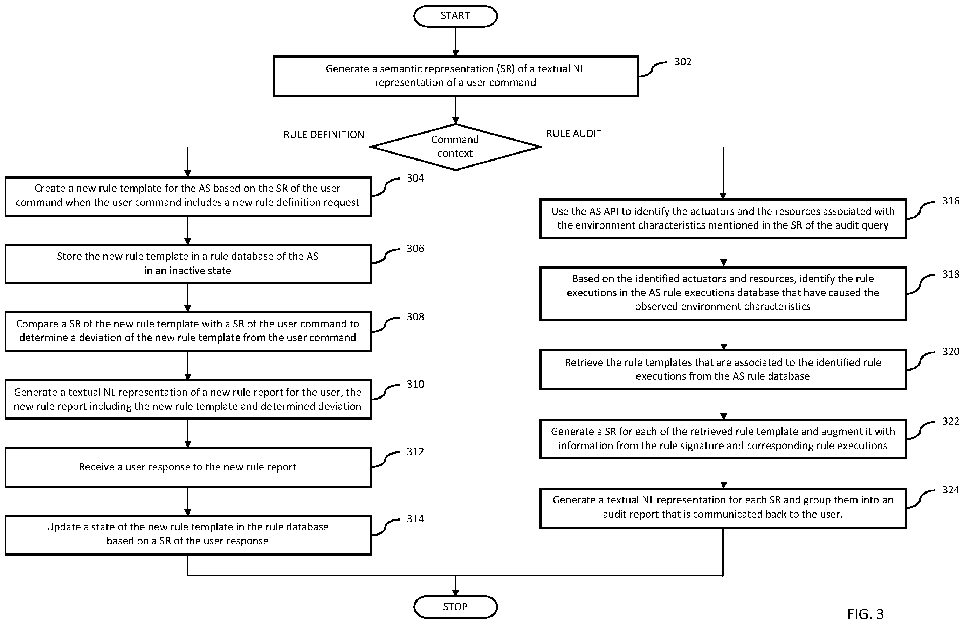

FIG.3 is a flowchart illustrating a method for defining and auditing rules in a knowledge-based automation system (AS), in accordance with an embodiment of the present invention. At step 302, a semantic representation (SR) of a textual NL representation of a user command is generated and is used to determine if the context refers to a rule definition or an audit. At step 304, a new rule template for the AS is created based on the SR of the user command when the user command includes a new rule definition request. The SR of the user command is mapped with a graph-based rule model or rule based model of the AS to create the new rule template.

At step 306, the new rule template is stored in a rule database of the AS in an inactive state. At step 308, an SR of the new rule template is compared with an SR of the user command to determine a deviation of the new rule template from the user command. The SR of the new rule template is generated based on the graph-based rule model of the AS. At step 310, a textual NL representation of a new rule report is generated for the user, the new rule report including the new rule template, and the determined deviation. At step 312, a user response to the new rule report is received. At step 314, a state of the new rule template in the rule database is updated based on SR of the user response. The inactive state of the new rule template in the rule database is updated to an active state, when the user approves the new rule template, wherein in the active state, the new rule template is executable to perform an automated action in an environment controlled by the AS. When the user rejects the new rule template, the new rule template is either deleted from the rule database or the new rule template is marked as rejected.

At step 316, the SR of the audit query is used to identify the actuators from the AS catalog and the resources from the AS resource database that are associated with the environment characteristics referenced in the said query. At step 318, the identified actuators and resources data is used to identify the rule executions that have caused the observed environment characteristics to occur. At step 320, the rule templates corresponding to the rule executions are retrieved from the AS rule database. At step 322, the SR of each rule template is generated and augmented with information coming from the rule signature and the rule executions identified in step 318. At step 324, the audit report is generated from the textual NL representations of each SR obtained in step 322, and communicated back to the user.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method for defining and auditing rules in a knowledge-based automation system (AS), comprising:
generating a semantic representation (SR) of a textual NL representation of a user command;
creating a new rule template for the AS based on the SR of the user command when the user command includes a new rule definition request;
storing the new rule template in a rule database of the AS in an inactive state;
comparing an SR of the new rule template with an SR of the user command to determine a deviation of the new rule template from the user command;
generating a textual NL representation of a new rule report for the user, the new rule report including the new rule template, and the determined deviation;
receiving a user response to the new rule report; and
updating a state of the new rule template in the rule database based on SR of the user response.

2. The method as claimed in claim 1 further comprising mapping the SR of the user command with a graph-based rule model of the AS to create the new rule template.

3. The method as claimed in any preceding claim further comprising generating the SR of the new rule template based on the graph-based rule model of the AS.

4. The method as claimed in any preceding claim further comprising:
generating an SR of the user response to the NL representation of the new rule template and the deviation; and
updating the inactive state of the new rule template in the rule database to an active state, when the user approves the new rule template, wherein in the active state, the new rule template is executable to perform an automated action in an environment controlled by the AS.

5. The method as claimed in any preceding claim further comprising: performing one of: deleting the new rule template from the rule database and marking the new rule template as rejected, when the user rejects the new rule template.

6. The method as claimed in any preceding claim further comprising: digitally signing the new rule template with a unique identifier of the user and associate the user details with the SR of the new rule template, when the user approves the new rule template.

7. The method as claimed in any preceding claim further comprising:
mapping an SR of the user command with one or more rule executions stored in a rule execution database of the AS when the user command includes an audit query for the AS in response to an observed characteristic of the environment, wherein recorded execution outcome of each rule matches the observed characteristic;
retrieving one or more rule templates corresponding to the one or more rule executions from the rule database; and
retrieving one or more users associated with each retrieved rule template, and an execution history of each rule template from the rule execution database.

8. The method as claimed in claim 7 further comprising:
generating an SR of each retrieved rule template, user information and an execution history of each retrieved rule template; and
generating an NL based audit report to the user based on the generated SR.

9. A system for defining and auditing rules in a knowledge-based automation system (AS), comprising:
a natural language (NL) interface, comprising:
an NL processor for generating a semantic representation (SR) of a textual NL representation of a user command;
a sematic data mapper for creating a new rule template for the AS based on the SR of the user command when the user command includes a new rule definition request, and storing the new rule template in a rule database of the AS in an inactive state;
a semantic data comparator for comparing an SR of the new rule template with an SR of the user command to determine a deviation of the new rule template from the user command; and
an NL generator for generating a textual NL representation of a new rule report for the user, the new rule report including the new rule template, and the determined deviation,
wherein the NL processor receives user response to the new rule report, and the semantic data mapper updates a state of the new rule template in the rule database based on the SR of the user response.

10. The system as claimed in claim 9, wherein the semantic data mapper is configured to map the SR of the user command with a graph-based rule model of the AS to create the new rule template.

11. The system as claimed in any preceding claim, wherein the NL interface further comprises a semantic data extractor for generating the SR of the new rule template based on the graph-based rule model of the AS.

12. The system as claimed in any preceding claim, wherein the semantic data mapper is further configured to:
generate an SR of the user response to the NL representation of the new rule template and the deviation; and
update the inactive state of the new rule template in the rule database to an active state, when the user approves the new rule template, wherein in the active state, the new rule template is executable to perform an automated action in an environment controlled by the AS.

13. The system as claimed in as claimed in any preceding claim, wherein the semantic data mapper is configured to perform one of: deleting the new rule template from the rule database or marking the new rule template as rejected, when the user rejects the new rule template.

14. The system as claimed in any preceding claim, wherein the semantic data mapper is further configured to digitally sign the new rule template with a unique identifier of the user and associate the user details with the SR of the new rule template, when the user approves the new rule template.

15. The system as claimed in any preceding claim, wherein the semantic data mapper is configured to:
map an SR of the user command with one or more rule executions stored in a rule execution database of the AS when the user command includes an audit query for the AS in response to an observed characteristic of the environment, wherein recorded execution outcome of each rule matches the observed characteristic;
retrieve one or more rule templates corresponding to the one or more rule executions from the rule database; and
retrieve one or more users associated with each retrieved rule template, and an execution history of each rule template from the rule execution database.
